# DEMANDE DE BREVET EUROPEEN

(11) **EP 0 666 660 A1**
(43) Date de publication de la demande: **09.08.1995**
(21) Numéro de dépôt: 95200203.8
(22) Date de dépôt: 27.01.1995
(51) Int. Cl.: H04L 1/24, H04B 17/02

(54) **Système de transmission de données transmises par une liaison comprenant des équipements intermédiaires avec une indication de la qualité des informations reçues**

(30) Priorité: 02.02.1994 FR 9401129
(71) Demandeur: T.R.T. TELECOMMUNICATIONS RADIOELECTRIQUES ET TELEPHONIQUES, 75013 Paris (FR); PHILIPS ELECTRONICS N.V., 5621 BA Eindhoven (NL)
(72) Inventeur: Auclair, Jean-Yves, Société Civile S.P.I.D., F-75008 Paris (FR); Bonnet, Jean-Marc, Société Civile S.P.I.D., F-75008 Paris (FR)
(74) Mandataire: Chaffraix, Jean

(57) **Abrégé**

Ce système de transmission de données par une liaison comprenant des équipements intermédiaires (I₁ à I_{N}), est prévu pour relier un côté émission d'un premier équipement (TE) utilisateur avec un côté réception d'un second équipement (TR) utilisateur. Dans l'équipement intermédiaire situé du côté réception, donc le plus en aval, est prévu un circuit de perturbation (30) qui perturbe des éléments binaires à sa sortie en fonction d'une information d'erreur représentative de la qualité des informations reçues au niveau des équipements intermédiaires.

Application : transmission de données numériques.

## Description

La présente invention concerne un système de transmission de données par une liaison comprenant des équipements intermédiaires, pour relier un côté émission d'un premier équipement utilisateur avec un côté réception d'un second équipement utilisateur.

Une telle invention trouve d'importantes applications notamment dans le domaine de la transmission de données numériques.

Un système connu de ce genre pour lequel la liaison est formée par au moins deux conduits numériques est décrit dans l'article de J.Y. Auclair et al. intitulé "DCN212 : équipement de sécurisation par doublement du conduit numérique à 2Mbits/s", paru dans la revue française COMMUTATION & TRANSMISSION, n°2, 1991, aux pages 77 à 85. Ce doublement a pour but d'obtenir le moins d'erreurs possible. Ce doublement est effectué dans deux équipements intermédiaires affectés chacun à des équipements utilisateurs. Dans ce système connu, les informations sont organisées en trames et pour un certain nombre de trames ou bloc, on détermine un code de contrôle, par exemple un code CRC (Cyclic Redundancy Check). Dans les trames qui proviennent de l'équipement utilisateur, on insère des informations de gestion. Ceci est effectué, déjà, dans l'équipement intermédiaire affecté à l'équipement utilisateur du côté émission. Avant d'envoyer ces trames vers le second équipement intermédiaire, on recalcule un autre code CRC de sorte qu'au niveau de l'équipement récepteur, l'information concernant des blocs mal reçus dans le premier équipement intermédiaire est perdue. Ce système connu ne peut pas donner la qualité globale de la liaison. Or, les utilisateurs exigent de plus en plus souvent d'avoir une indication de la qualité globale de leur liaison.

Pour répondre à cette exigence, la présente invention propose un perfectionnement au système décrit dans le préambule en donnant une bonne indication de la qualité globale de la transmission entre deux équipements utilisateurs.

Pour cela, un tel système est remarquable en ce que dans l'équipement intermédiaire situé du côté réception, donc le plus en aval, est prévu un circuit de perturbation qui perturbe des éléments binaires à sa sortie en fonction d'une information représentative de la qualité des informations reçues au niveau des équipements intermédiaires.

La présente invention concerne aussi des équipements intermédiaires convenant à de tels systèmes.

La description suivante faite en regard des dessins ci-annexés, le tout donné à titre d'exemple non limitatif, fera bien comprendre comment l'invention peut être réalisée.
- La figure 1 montre le schéma d'un système conforme à l'invention.
- La figure 2 montre le schéma d'un deuxième système conforme à l'invention.
- La figure 3 montre la partie réception d'un équipement intermédiaire.
- La figure 4 montre la partie émission d'un équipement intermédiaire.
- La figure 5 est un diagramme temps pour expliquer le fonctionnement de la partie représentée à la figure 4.
- La figure 6 est un diagramme d'états pour une machine d'états faisant partie de la partie émission de la figure 4.

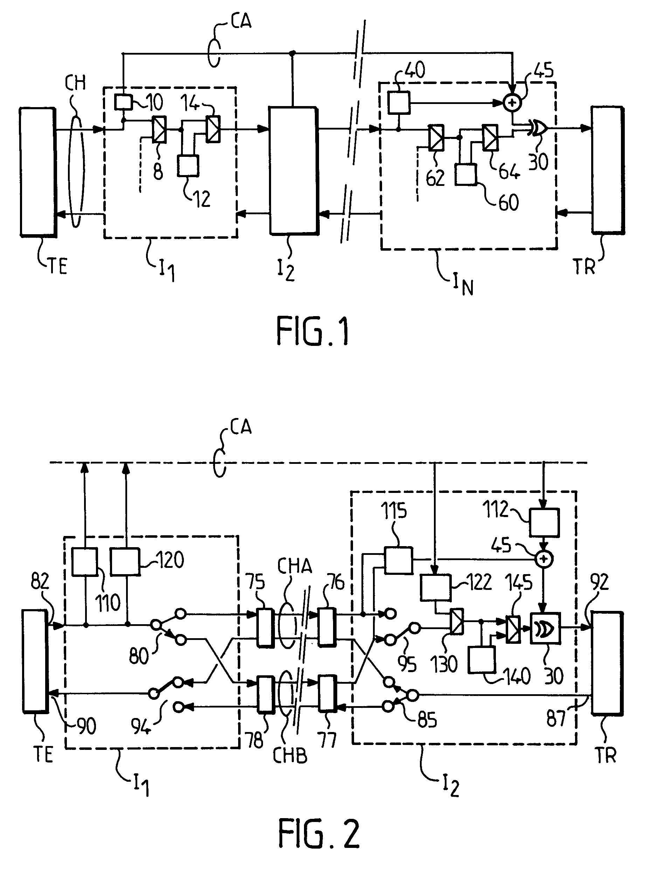

A la figure 1 qui représente un schéma d'un système conforme à l'invention, la référence TE indique un équipement utilisateur qui est considéré comme le point de départ d'une émission d'informations sur un conduit numérique CH vers un équipement utilisateur TR. Ce conduit numérique assure aussi la transmission dans l'autre sens. Entre ces deux équipements, sur ce conduit numérique sont insérés différents équipements intermédiaires I₁, I₂, ..., I_{N}. Sur cette figure, seul l'équipement I₁ est montré en détail, les autres équipements pouvant avoir une structure identique. Cet équipement I₁ peut intercaler des informations supplémentaires dans le flux des informations qu'il reçoit du conduit numérique CH. Ceci est effectué par un multiplexeur d'informations 8. Pour garantir une certaine intégrité des informations, on affecte un code de contrôle à un bloc de données en vue de sa transmission. Ce code de contrôle est, d'une part, recalculé dès la réception des informations par un circuit 10 pour être comparé avec celui qui a été transmis et d'autre part, il est de nouveau déterminé par un circuit de calcul 12 pour tenir compte des informations supplémentaires. Pour cela, il est élaboré sur la base des informations à la sortie du multiplexeur 8. Ce code est ensuite inséré dans le conduit numérique au moyen d'un deuxième multiplexeur 14. Comme ce code de contrôle est effectué au niveau de chaque circuit intermédiaire, le traitement qui est fait au niveau de l'équipement TR ne reflète plus la qualité de la transmission globale puisque les codes de contrôle sont cohérents à chaque sortie des équipements intermédiaires et masque de ce fait les erreurs survenant en amont du dernier équipement intermédiaire, détectables par ce code de contrôle.

Conformément à l'invention, pour pouvoir apprécier la qualité de la transmission entre les équipements TE et TR, l'invention propose que, dans l'équipement intermédiaire I_{N} situé du côté réception, donc le plus en aval, soit prévu un circuit de perturbation 30 qui perturbe des éléments binaires à sa sortie en fonction d'une information représentative de la qualité des informations reçues au niveau des équipements intermédiaires

La qualité de l'information déterminée par chacun des équipements intermédiaires est véhiculé au moyen d'un canal auxiliaire CA vers le circuit intermédiaire I_{N}. Ces informations sont accumulées ainsi que l'indication de qualité effectuée par le circuit 40 faisant partie de cet équipement I_{N} par un circuit additionnneur 45 opérant en base 2. L'information de cumul agit sur le circuit de perturbation 30 constitué à partir d'une porte OU-EXCLUSIVE pour que l'information à la sortie de l'équipement I_{N} soit détériorée en fonction de la qualité globale de la transmission. Ainsi, au niveau de l'équipement terminal TR, on pourra détecter une information ayant un mauvais code de contrôle.

En fait, selon une caractéristique de l'invention cette perturbation porte sur les codes de contrôle élaborés par un circuit de calcul 60 qui a la même fonction que le circuit 12 déjà mentionné. Ainsi, le nombre de blocs de données affectés à ces codes de contrôle perturbés, qui seront détectés comme faux au niveau de l'équipement terminal TR est en conformité avec le nombre de blocs faux détectés par les différents équipements intermédiaires I₁ à I_{N}.

La figure 2 montre le schéma d'un autre système conforme à l'invention, correspondant au système précité. Des éléments communs avec ceux de la figure 1 portent les mêmes références. Ce système utilise une liaison à 2 048 kbit/s telle que définie par la recommandation G.704 du C.C.I.T.T. Le système montré comporte les équipements terminaux TE et TR et deux équipements intermédiaires I₁ et I₂. Les équipements TR et TE sont des terminaux d'extrémités, tels que brasseurs ou multiplexeurs et les équipements I₁ et I₂, des modules de duplication qui assurent la duplication des conduits. Ainsi le conduit CHA qui relie dans les deux sens de transmission l'équipement I₁ avec l'équipement I₂ est doublé par le conduit CHB qui assure la même relation. Différents circuits d'interface 75, 76, 77 et 78 appelés terminaux de ligne assurent l'émission et la réception des signaux sur les conduits CHA et CHB. Les circuits 75 et 76 sont connectés aux extrémités du conduit CHA et les circuits 77 et 78 aux extrémités du conduits CHB. Pour dupliquer la transmission, l'équipement I₁ comporte un circuit 80 pour injecter dans les deux conduits CHA et CHB les informations à émettre provenant de l'accès de sortie 82 de l'équipement TR, tout comme l'équipement I₂ comporte un circuit injecteur 85 pour effectuer la même opération dans les deux conduits CHA et CHB sur les informations de l'accès de sortie 87 de l'équipement TR. Les informations transmises respectivement selon les deux sens de transmission par les conduits CHA et CHB sont fournies aux accès d'entrée 90 et 92 des équipements TE et TR en transitant par des circuits de sélection 94 et 95. Ces circuits de sélection 94 et 95 font respectivement partie des équipements I₁ et I₂. Ce système et son fonctionnement sont décrits, outre dans l'article précité, dans les documents de brevet européen n° 0 454 246 enregistré sous le numéro 91200949.5 et n° 0 454 249 enregistré sous le numéro 91200952.9. Dans la suite du présent exposé, on ne discutera que de la transmission dans le sens allant de l'équipement TE vers l'équipement TR. Des éléments de même structure assurant les mêmes fonctions dans l'autre sens sont prévus dans ces équipements.

L'information, dans cet exemple décrit, se présente sous forme de trames de 256 éléments binaires formant 32 intervalles de temps pour 8 éléments binaires. Ces intervalles de temps sont référencés par IT0 à IT31. On définit aussi une multitrame qui est formée par 16 trames. L'intervalle de temps IT0 est affecté notamment à certaines tâches de gestion des trames et multitrames. Ainsi, le premier élément binaire de cet intervalle transmet un code CRC4 de 4 éléments binaires pour un bloc de 2048 éléments binaires (soit 16 trames). Ce code CRC4 est défini dans la recommandation précitée. Chaque élément binaire de ce code est transmis toutes les deux trames. Ce code CRC4 calculé avant la transmission est donc transmis pour être comparé avec le code CRC4 calculé à la réception. S'il y a un désaccord entre ces deux codes, on déclare qu'il y a eu erreur dans la transmission et on compte un bloc faux. Les intervalles de temps IT0 servent aussi à gérer les liaisons entre les équipements I₁ et I₂. Par exemple, ils peuvent transmettre un élément binaire indiquant une alarme. La modification de l'intervalle de temps IT0 impose de refaire les calculs de CRC4 au niveau de chaque conduit CHA et CHB de sorte que le nombre de blocs faux reçus par l'équipement TR n'est pas représentatif de la qualité de la liaison entre TE et TR.

A la figure 2, la référence 110 représente un détecteur de blocs faux qui opère, comme il l'a été déjà dit sur la comparaison des codes CRC émis par l'équipement utilisateur TE et le code calculé sur les trames reçues. Si la comparaison est mauvaise, ceci est transmis par le canal CA vers l'équipement I₂. Le circuit additionneur 45 superpose cette information qui est récupérée par un circuit récupérateur 112 avec celle fournie par un autre détecteur de blocs faux 115 situé dans cet équipement I₂. Le circuit de perturbation 30, constitué à partir d'une porte OU-EXCLUSIVE, est connecté entre la sortie du conduit sélectionné par le circuit 95 et l'accès 92 de sorte qu'un signal "1" qui provient du circuit 45 change alors la valeur de l'élément binaire du circuit selectionné. Cette modification n'a lieu, selon une caractéristique de l'invention, que sur les éléments binaires constituant le code CRC4 affecté aux trames issues du conduit sélectionné.

Selon une autre caratéristique importante de l'invention, on propose de transmettre l'élément binaire d'alarme bE connu sous le nom de bit E qui est aussi défini par la recommandation précitée. Cet élément binaire est positionné par l'équipement TE et est détecté au niveau de l'équipement intermédiaire I₁ par le détecteur d'élément binaire d'alarme 120 pour qu'il soit transmis vers l'équipement intermédiaire I₂ par l'intermédiaire au canal auxiliaire CA. Cet élément binaire est récupéré par le circuit récupérateur d'élément binaire d'alarme 122 pour qu'il soit mis à sa place dans la trame au moyen d'un multiplexeur 130. Puis un circuit de détermination de code CRC 140 détermine le code de contrôle qui est inséré dans la trame au moyen d'un deuxième multiplexeur 145. C'est à la sortie de ce multiplexeur 145 qu'est branché le circuit de perturbation 30.

Le canal CA peut être constitué par une trame formée par des éléments binaires disponibles de l'intervalle de temps IT0 à l'intérieur de la trame correspondant à ladite recommandation. En pratique, on utilise quatre éléments binaires pour indiquer le nombre de blocs CRC4 détectés faux parmi les huits derniers blocs reçus (un bloc = 8 trames de 32 IT). Ces quatre éléments binaires sont donc transmis toutes les 8 ms. On perturbera en correspondance autant de blocs, à la sortie de l'équipement I₂ par l'intermédiaire du circuit 3a, que l'indiquent ces quatre éléments binaires.

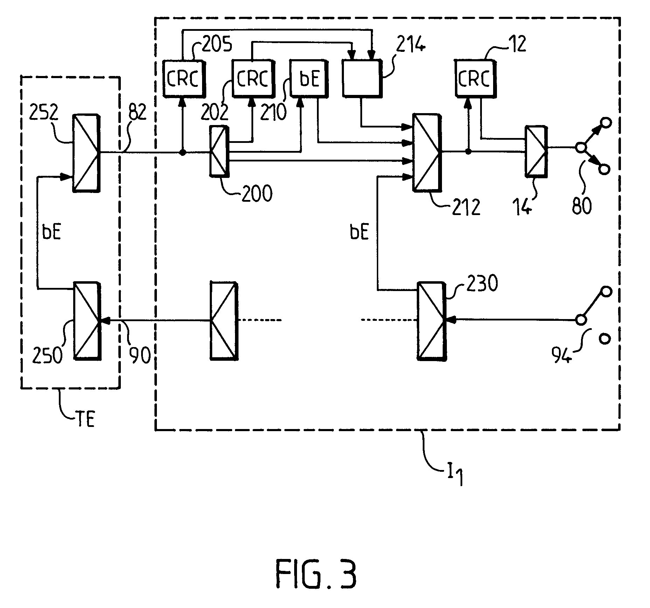

A la figure 3, on a montré plus en détail la partie réception de l'équipement intermédiaire I₁ et son interaction avec l'équipement terminal TE. Les éléments communs à ceux de la figure précédente portent les mêmes références.

L'équipement I₁ comporte une premier démultiplexeur 200 dont l'entrée est reliée à l'accès de sortie 82 de l'équipement terminal TE. Ce démultiplexeur fournit sur une première de ses sorties le code de contrôle précité. Ce code est transmis depuis l'équipement TE et est emmagasiné dans un registre 202 pour être comparé avec le code CRC calculé par le circuit 205 sur le flux de données provenant de l'accès 82. Sur une deuxième de ses sorties, le démultiplexeur fournit les éléments binaires d'alarme qui sont emmagasinés dans un registre 210 et sur une troisième de ses sorties, les informations utiles. Un multiplexeur 212 multiplexe différentes informations à ses entrées. Une première de ses entrées reçoit le résultat de la comparaison des codes de contrôle pour émettre dans le canal CA l'indication du nombre de blocs faux défini par le circuit 214 qui effectue la comparaison des codes calculés et transmis. Le canal CA est constitué, ici, par une sous-trame ménagée dans la trame définie par la recommandation G.704 précitée. Sur une deuxième entrée, le multiplexeur reçoit l'élément binaire emmagasiné dans le registre 210 pour être émis, lui aussi, dans la sous-trame. La troisième entrée reçoit les informations utiles à transmettre. Quant à la quatrième entrée, elle reçoit l'indication de l'élément binaire d'alarme décelé dans le conduit de retour et prélevé par un démultiplexeur 230 branché sur le conduit de retour. Cet élément binaire d'alarme est, lui, envoyé dans l'emplacement prévu à cet effet par ladite recommandation. Ainsi, il n'y a pas interférence entre ces éléments binaires d'alarme, ceux-ci pouvant être gérés d'une manière indépendante. Par exemple ils peuvent être gérés pour chaque conduit CHA et CHB indépendamment de ceux transmis dans ladite sous-trame. L'élément binaire d'alarme emmagasiné dans le registre 210 résulte d'une mauvaise transmission entre l'équipement I₁ et l'équipement TE. Au niveau de cet équipement, il est rendu disponible à une sortie d'un démultiplexeur 250 et est transmis à une entrée d'un multiplexeur 252 dont la sortie est reliée à l'accès 82. Ainsi les éléments binaires d'alarme sont transmis vers l'équipement I₂ par des chemins différents. A la sortie du multiplexeur 212, on calcule, au moyen du circuit 12 la valeur du code de contrôle pour qu'il soit envoyé vers l'équipement intermédiaire I₂ via le multiplexeur 14.

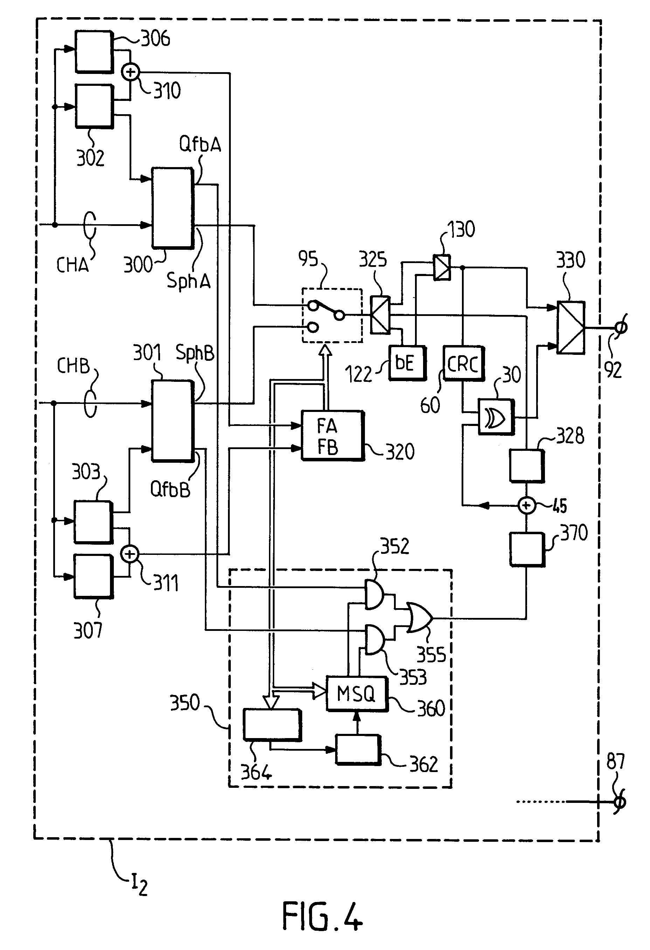

La figure 4 montre plus en détail la partie réception de l'équipement I₂.

Sur cette figure les références 300 et 301 représentent des mémoires de type circulaire décrites dans les documents de brevets déjà cités, chacune étant affectée à un des conduits numériques CHA et CHB. Aux sorties respectives SphA et SphB de ces mémoires, les informations utiles sont rigoureusement calées dans le temps, de sorte que le circuit de sélection 95 peut commuter sans ajouter une détérioration supplémentaire. Sur chacun de ces conduits, on a prévu un détecteur de blocs faux 302 respectivement 303 et un détecteur d'anomalies 306 respectivement 307, ces anomalies pouvant être une absence de signaux, une perte de verrouillage trames etc... Pour plus de détails, on pourra se rapporter aux documents de brevet déjà cités. Au moyen d'un circuit de cumul 310 respectivement 311 les indications de mauvais fonctionnement sont cumulées et sont transmises à un circuit de commande de commutation 320 pour la commande du circuit de sélection 95. A la sortie du circuit 95, un démultiplexeur 325 dirige vers le circuit récupérateur 122 l'élément d'alarme transmis par la sous-trame formant le canal CA, vers un circuit de gestion 328 le nombre de blocs faux transmis par ce canal CA. Ce démultiplexeur fournit aussi l'information utile. Le circuit de calcul 60 fournit son code à une entrée du circuit de perturbation 30. Un multiplexeur 330 fournit, sous forme multiplexée, à l'accès 92 les informations présentes à ses deux entrées. A sa première entrée, sont présentes les informations utiles rendues disponibles à la sortie du multiplexeur 130 qui insère à leur place les éléments binaires d'alarme, à sa deuxième entrée, le code de contrôle perturbé ou non. Pour que le code de contrôle soit perturbé d'une manière convenable en fonction de la qualité des blocs prélevés sur les conduits CHA et CHB, on a prévu un circuit de commande de perturbation 350. Ce circuit utilise les signaux de commande issus du circuit 320 et les signaux de fin de blocs faux issus des sorties QfbA, QfbB des circuits à mémoire 300 et 301. Ces signaux sont issus respectivement des circuits 302 et 303 et sont enregistrés dans les mémoires circulaires 300 et 301, de la même manière, en parallèle, que les informations provenant de CHA et CHB. Ce circuit 350 comporte un circuit d'aiguillage pour transmettre ces signaux de sortie QfbA et QfbB vers le circuit de perturbation 30. Ce circuit d'aiguillage est formé des portes ET 352 et 353 et d'une porte OU 355 aux entrées connectées aux sorties des portes ET 352 et 353. Ce circuit permet de diriger vers le circuit de perturbation 30 les signaux présents aux sorties QfbA, QfbB en fonction des signaux issus d'une machine à états 360 qui fournit un mot binaire MSQ à deux éléments binaires. Le premier élément binaire détermine l'ouverture de la porte 352, le signal a alors la valeur "1" et le deuxième celle de la porte 353. Les états de cette machine dépendent du signal de sortie d'un circuit de temporisation 362 amenant une temporisation de durée TT et des signaux de commande du circuit de sélection 320. Le circuit de temporisation 362 est déclenché par un détecteur de changement de position 364 du circuit de sélection 320. Un circuit de positionnement temporel 370 intercalé entre la sortie du circuit de commande 350 et le circuit de perturbation assure que cette perturbation n'interviendra que sur un seul élément binaire du code de contrôle accompagnant les informations à transmettre vers l'accès 92. Les informations issues de ce circuit 370 et celles provenant du circuit 328 sont cumulées par le circuit 45 avant d'être appliquées au circuit 30.

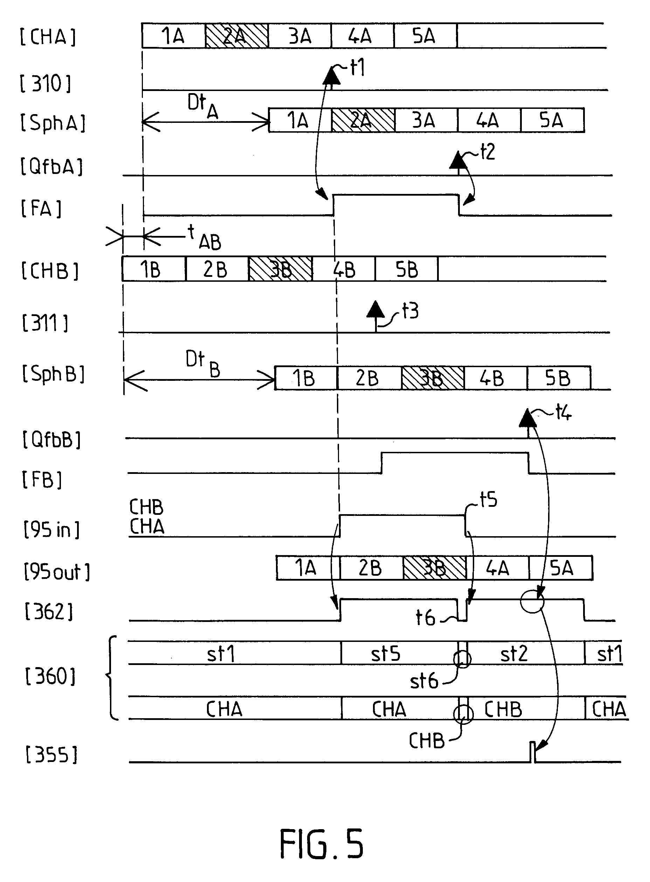

Avant d'entamer les explications sur le fonctionnement de cet équipement I₂, il convient de remarquer, dans le cadre de cet exemple décrit, qu'un bloc est déclaré faux 2 ms après le début de celui-ci. Ceci découle directement de ladite recommandation. La temporisation TT apportée par le circuit 362 est légèrement inférieure à cette valeur soit un peu supérieure à 1,75 ms. On peut alors maintenant se rapporter à la figure 5 qui est un diagramme temps du fonctionnement de l'équipement I₂.

La ligne [CHA] de ce diagramme représente une succession de blocs 1A, 2A, 3A, 4A, 5A ... transmis sur le conduit CHA. On admet que le bloc 2A est erroné. Il est, sur la figure 5, hachuré. Ce bloc faux déclenche à l'instant t1 un signal actif à la sortie du circuit 310. Ceci est indiqué à la ligne [310] de la figure. La ligne [SphA] représente les blocs qui sont appliqués à l'entrée du circuit de sélection 95. Ces blocs sont décalés dans le temps d'une quantité Dt_{A} apportée par le circuit 300. La ligne suivante [FA] représente un signal interne au circuit 320. Ce signal indique, tant qu'il est actif, que les données à la sortie SphA sont fausses. Ce signal reste actif depuis l'instant t1 jusqu'à un instant t2 correspondant à l'apparition du signal fin de bloc faux surgissant à la sortie QfbA.

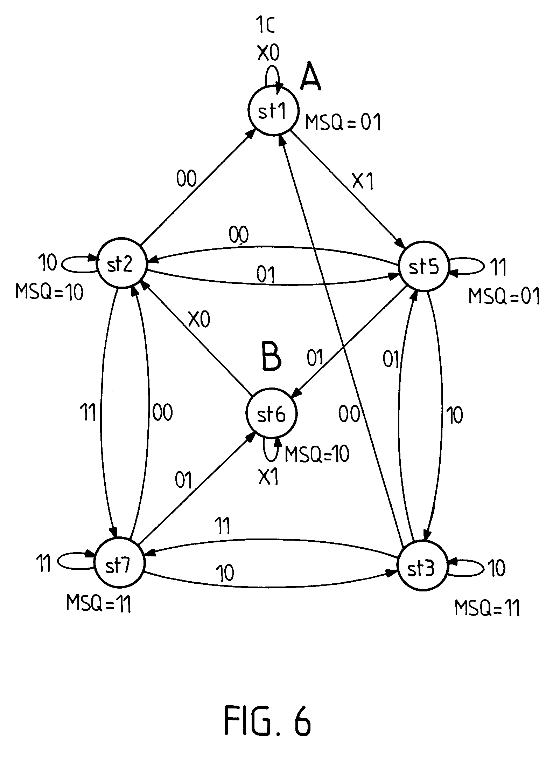

La ligne [CHB] de ce diagramme représente une succession de blocs 1B, 2B, 3B, 4B, 5B ... transmis sur le conduit CHB. Ces blocs correspondent respectivement aux blocs 1A, 2A, 3A, 4A, 5A ... transmis sur le conduit CHA. Il existe un écart de temps t_{AB} entre les blocs du conduit CHA et les blocs du conduit CHB. On rappelle que c'est le but des circuits 300 et 301 de présenter aux entrées du circuit de sélection 95 des blocs qui coïncident rigoureusement. On admet que le bloc 3B est erroné, il est hachuré sur la figure 5. Ce bloc faux déclenche à l'instant t3 un signal actif à la sortie du circuit 311. Ceci est indiqué à la ligne [311] de la figure. La ligne [SphB] représente les blocs qui sont appliqués à l'entrée du circuit de sélection 95. Ces blocs sont décalés dans le temps d'une quantité Dt_{B} apportée par le circuit 301. La ligne suivante [FB] représente un signal interne au circuit 320. Ce signal indique, tant qu'il est actif, que les données à la sortie SphB sont fausses. Ce signal reste actif depuis l'instant t3 jusqu'à un instant t4 correspondant à l'apparition du signal fin de bloc faux surgissant à la sortie QfbB. La ligne [95in] montre le changement de position du circuit de sélection 95. On admet qu'avant l'instant t1 le circuit de sélection prélevait les informations sur le conduit CHA. Du fait du passage à l'état actif du signal FA le circuit 95 choisit de prendre les informations sur le conduit CHB, à l'instant t1. Ce changement est détecté par le circuit 364 ce qui entraîne le démarrage du circuit de temporisation 362. Comme il y a détection d'un bloc faux sur le conduit CHB à l'instant t3, ceci va provoquer après la fin de ce bloc faux un basculement de ce circuit de sélection sur le conduit CHA, à l'instant t5. La fin de la temporisation démarrée à l'instant t1 se termine à l'instant t6 un peu avant le temps t5. La ligne [360] montre à sa partie supérieure les changement d'états de la machine 360 et à sa partie inférieure l'autorisation de passage A ou B pour respectivement les signaux issus des sorties QfbA et QfbB. Ces différents états seront explicités ci-après à l'aide de la figure 6. La ligne [95 out] représente les blocs à la sortie du circuit de sélection 95. On constate que le bloc 3B, qui est un bloc faux, a été transmis. L'indication de fin de bloc faux doit donc déclencher l'activation du circuit de perturbation 30. Ceci est indiqué à la ligne [355] qui montre ce passage.

A la figure 6, on a montré le diagrame d'états de la machine 360. Il est facile, pour un homme de l'art, de réaliser cette machine à partir du diagramme. Les différents états st1, st2, st3, st5 et st6 sont entourés d'un cercle. A chacun de ces états correspond une valeur du signal MSQ qui apparait à la sortie de cette machine. Aux états st1 à st7 correspondent respectivement les valeurs MSQ qui sont notées à côté des cercles. Deux états notés A et B sont des états stables en ce sens qu'ils reflètent une situation où les erreurs sur les conduits CHA et CHB ne sont pas prises en compte et qu'il n'y a pas lieu de prévoir des commutations à l'intérieur du circuit de sélection 95. Les changements d'état, représentés par des flèches, sont déclenchés par un mot binaire à deux éléments T et C. L'élément T prend la valeur "1" lorsque la temporisation est lancée. L'élément binaire C est déterminé par la position choisie au niveau du circuit 95. Lorsque le conduit CHA est choisi, C a la valeur "0", et la valeur "1" si c'est le conduit CHB. Le symbole "X" signifie que cette valeur n'a aucune influence sur le changement d'état. Ces mots sont placés près des flèches.

On résume ci-dessous les différents états où TT représente la temporisation apportée par le circuit 362.
- st1 :: état stable depuis au moins la durée TT. La commutation se trouvant sur CHA, les blocs faux de CHA activent le circuit de perturbation 30.
- st5 :: de st1 suite à une commutation la machine passe a l'état st5 en même temps que la temporisation est initialisée. C'est un état provisoire car si aucune commutation ne survient avant l'échéance de la temporisation la machine se positionnera en st6. Les blocs faux de CHA activent le circuit de perturbation 30.
- st6 :: état semblable à l'état st1 mais avec le commutateur sur CHB. Les blocs faux de CHB activent le circuit de perturbation 30.
- st3 :: de st5 si une commutation survient avant l'échéance de la temporisation, la machine passe de st5 à st3 et la temporisation est re-initialisée. De st3 si la temporisation se termine avant une commutation le système passe à l'état st1. Les blocs faux de CHA et de CHB activent le circuit de perturbation 30.
- st2 :: rôle symétrique de st5.
- st6 :: rôle symétrique de st1.
- st7 :: rôle symétrique de st3.

## Revendications

1. Système de transmission de données par une liaison comprenant des équipements intermédiaires, pour relier un côté émission d'un premier équipement utilisateur avec un côté réception d'un second équipement utilisateur, caractérisé en ce que dans l'équipement intermédiaire situé du côté réception, donc le plus en aval, est prévu un circuit de perturbation qui perturbe des éléments binaires à sa sortie en fonction d'une information d'erreur représentative de la qualité des informations reçues au niveau des équipements intermédiaires.

2. Système de transmission de données selon la revendication 1 dans lequel la qualité des informations, transmises par blocs, est mesurée au moyen d'un code de contrôle se rapportant sur chacun de ces blocs, caractérisé en ce que le circuit de perturbation perturbe un certain nombre de blocs qui dépend du nombre de blocs déclarés faux par traitement du code de contrôle effectué au niveau de chacun des équipements intermédiaires.

3. Système de transmission selon l'une des revendications 1 et 2, caractérisé en ce qu'il est prévu un canal dit canal d'aide reliant tous les équipements intermédiaires pour transmettre, entre autres, l'information d'erreur.

4. Système de transmission de données selon l'une des revendications 1 à 3 dans lequel il est prévu un canal de retour pour indiquer aux parties émission des équipements la mauvaise réception par les équipements aval des informations de la partie émission amont, caractérisé en ce qu'il est prévu un canal d'aide pour transmettre cette indication de mauvaise réception.

5. Système de transmission de données selon l'une des revendications 1 à 4 pour lequel il est prévu au moins deux circuits intermédiaires situés à proximité des équipements utilisateurs pour assurer une duplication des conduits numériques les reliant.

6. Système de transmission de données selon l'une des revendications 2 à 5, caractérisé en ce que la perturbation des blocs est effectuée sur les codes de contrôle.

7. Système de transmission de données selon l'une des revendications 2 à 5, caractérisé en ce que le circuit de perturbation est formé à partir d'une porte OU-EXCLUSIVE pour effectuer un opération OU-EXCLUSIVE entre les éléments binaires avant leur sortie et le signal de commande de perturbation.

8. Equipement intermédiaire destiné à être inséré, avec au moins un autre équipement intermédiaire, dans une liaison faisant partie d'un système de transmission pour relier un côté émission d'un premier équipement utilisateur avec un côté réception d'un second équipement utilisateur, équipement intermédiaire caractérisé en ce qu'il comporte un circuit de perturbation pour perturber des éléments binaires à sa sortie en fonction d'une information d'erreur représentative de la qualité des informations reçues au niveau des équipements intermédiaires.

9. Equipement intermédiaire selon la revendication 8 dans lequel la qualité des informations, transmises par blocs, est mesurée au moyen d'un code de contrôle se rapportant sur chacun de ces blocs, caractérisé en ce que le circuit de perturbation perturbe un certain nombre de blocs qui dépend du nombre de blocs déclarés faux par traitement du code de contrôle effectué au niveau de chacun des équipements intermédiaires.

10. Equipememnt intermédiaire selon l'une des revendications 8 et 9, caractérisé en ce qu'il est prévu un canal dit canal d'aide reliant tous les équipements intermédiaires pour transmettre, entre autres, l'information d'erreur.
